# EUROPÄISCHE PATENTSCHRIFT

(11) **EP 2 332 884 B1**
(45) Veröffentlichungstag und Bekanntmachung des Hinweises auf die Patenterteilung: **27.07.2016**
(21) Anmeldenummer: 10191071.9
(22) Anmeldetag: 12.11.2010
(51) Int. Cl.: C01B 33/20, C04B 28/18

(54) **Reaktionsprodukte aus Aluminiumsilikat, Herstellung und Verwendung**
Reaction products made of aluminium silicate, production and use
Produits de réaction en silicate d'aluminium, fabrication et utilisation

(30) Priorität: 13.11.2009 DE 102009052812
(43) Veröffentlichungstag der Anmeldung: 15.06.2011
(73) Patentinhaber: bene_fit systems GmbH & Co. KG, 92242 Hirschau (DE)
(72) Erfinder: Kräuter, Reinhard, 92237 Sulzbach-Rosenberg (DE)
(74) Vertreter: Hannke, Christian

(56) Entgegenhaltungen:
- EP-A1- 0 590 816
- WO-A1-01/79131
- DE-A1- 2 227 001
- DE-A1- 2 829 692
- DE-C- 520 053
- DE-U1- 20 305 727
- GB-A- 456 780
- GB-A- 1 142 230
- GB-A- 1 170 854
- GB-A- 190 504 194
- US-A- 3 679 446
- US-A- 4 689 084
- US-B1- 6 616 873

## Beschreibung

Die vorliegende Erfindung bezieht sich auf Reaktionsprodukte aus einer Reaktion in wässrigem Medium zwischen einer reaktiven Al- und Si-Verbindung und einer Verbindung, die ein Element der 2. Hauptgruppe des Periodensystems umfasst, wobei die reaktive Al- und Si-Verbindung thermisch aktiviert ist und die Reaktionsprodukte Eigenschaften aufweisen, welche ausgewählt sind aus einer Gruppe, die eine hohe thermische Stabilität, eine ausgeprägt Feinstrukturierung, eine große spezifische Oberfläche BET und eine große Porosität umfasst. Weiterhin bezieht sich die Erfindung auf ein Verfahren zur Herstellung von Reaktionsprodukten mit Eigenschaften, welche aus einer Gruppe ausgewählt sind, die eine hohe thermische Stabilität, eine ausgeprägte Feinstrukturierung, eine große spezifische Oberfläche BET und eine große Porosität umfasst, aus einer reaktiven Al- und Si-Verbindung und einer Verbindung, die ein Element der 2. Hauptgruppe des Periodensystems umfasst, wobei in einem Verfahrensschritt die Al- und Si-Verbindung thermisch aktiviert und in eine reaktive Form überführt wird und diese in einem folgenden Verfahrensschritt in wässrigem Medium mit einer Verbindung, die ein Element der 2. Hauptgruppe des Periodensystems umfasst, umgesetzt wird.

In der Bauindustrie wird Kalksandstein bereits seit Jahrhunderten als Rohstoff verwendet. Im Baugewerbe wird neben dem natürlichem Kalksandstein auch ein industriell gefertigtes Produkt als Kalksandstein bezeichnet. Bei diesem handelt es sich um ein synthetisches Calciumsilikathydrat. Dieses wird unter hydrothermalen Bedingungen hergestellt, indem zunächst Branntkalk gelöscht - und somit zu Calciumhydroxid Ca(OH)₂ ("Kalkhydrat") umgesetzt wird - und dieses anschließend in Autoklaven bei ca. 200°C und 16 bar mit Quarzsand und gegebenenfalls Kalksplitt umgesetzt wird. Bei diesem Verfahren ist es möglich, während der Reaktion zwischen Calciumhydroxid und Siliciumdioxid (Quarz) gleichzeitig die geometrische Form des Produktes zu bestimmen. Es sind somit spezielle Formteile herstellbar.

DE 41 04 905 beschreibt spezielle Bedingungen zur Umsetzung von Kalk, Quarz und Wasser zu Xonotlit in einem hydrothermalen Verfahren. In diesem Verfahren wird der Quarz zunächst durch Mahlen von Quarzmehl oder Quarzsand in einer Schwingmühle aktiviert. Dies erfolgt vor der Zumischung zum Reaktionsgemisch und ermöglicht eine nahezu vollständige Umsetzung des Quarzes, wodurch das hergestellte Xonotlit weit weniger abrasiv wird. Außerdem ermöglicht dieses Verfahren eine Reaktionsführung bei geringeren Drücken und Temperaturen. Die Bildung von Sekundärstrukturen des Reaktionsproduktes Xonotlit wird bei dem in DE 41 04 905 offenbarten Verfahren durch das Auftreiben der Reaktionslösung mit Schaumbildnern vermieden. Dies kann unter anderem mittels Aluminiumzusätzen erfolgen, wobei die Aluminiumkomponente dabei nicht mit der Calciumkomponente unter Ausbildung von Ca-Al-Verbindungen reagiert, sondern in alkalischer wässriger oder zumindest feuchter Umgebung unter Gasentwicklung zu Al(OH)₃ reagiert. Dieses wird entweder aus dem Ca-und Si-enthaltenenden Reaktionsprodukt herausgewaschen oder verbleibt in diesem, hat jedoch in dem hergestellten Feststoff (Xonotlit) keine chemisch-mineralogische oder strukturbeeinflussende Wirkung und wird nicht in das Kristallgitter des Xonotlits eingebaut. Das nach diesem Verfahren produzierte, in Stäbchen kristallisierte Xonotlit der Formel Ca₆S₁₆O₁₇(OH)₂ kommt beispielsweise als Füllstoff oder Pigment in der Papierherstellung, als Füllstoff in der Kunststoffherstellung oder in Farbenanwendungen zum Einsatz.

Die Keramische Zeitschrift 61 (2009) [4] offenbart ein auf einem CaO-Al₂O₃-System basierendes Produkt, dessen Anwendung und ein Verfahren zu dessen Herstellung. Die Herstellung dieses Produkts erfolgt durch die Umsetzung von Calciumverbindungen mit Böhmit (AlO(OH)) zu Calciumaluminiumhydraten als Vorstufe zu CA6. Das Produkt kann sowohl gebrannt als auch ungebrannt eingesetzt werden und zeichnet sich durch eine vergleichsweise hohe Porosität und - dadurch bedingt - eine geringe Wärmeleitfähigkeit aus. Weiterhin ist es über einen großen Bereich temperaturstabil und wird daher für thermisch stark beanspruchte Anwendungen wie z.B. im Industrieofenbau verwendet.

Die in der Bauindustrie verwendeten Materialien enthalten demnach nach dem Stand der Technik wenn sie Ca und Si enthalten kein Al als chemisch-mineralogische oder Struktur beeinflussende Komponente. Demgegenüber weisen Ca- und Al-enthaltende Produkte nach dem Stand der Technik kein Si auf. Calciumverbindungen (z.B. CaO bzw. Ca(OH)₂) werden somit unter hydrothermalen Bedingungen entweder mit Siliciumverbindungen z.B. aktiviertem SiO₂ (Quarz) oder mit Aluminiumverbindungen wie z.B. reaktivem Böhmit, AIO(OH) umgesetzt, jedoch nicht mit Verbindungen, die sowohl Al als auch Si enthalten oder mit Mischungen aus Al- und Si-enthaltenden Verbindungen.

US 4 689 084 A beschreibt ein Verfahren zur Herstellung von Reaktionsprodukten aus einer reaktiven, thermisch aktivierten Al-Si-Verbindung (Metakaolin) und einer Verbindung, die ein Element der 2. Hauptgruppe des Periodensystems umfasst, sowie die Verwendung dieser Reaktionsprodukte als Wärmedämmmaterial.

Es besteht daher die Aufgabe, Reaktionsprodukte aus einer Reaktion in wässrigem Medium zwischen einer reaktiven Al- und Si-Verbindung und einer Verbindung, die ein Element der 2. Hauptgruppe des Periodensystems umfasst, bereitzustellen. Dabei sollte die Al- und Si-Verbindung in einer reaktiven Form (z.B. thermisch aktiviert) vorliegen und unter einfach zu realisierenden Bedingungen, z.B. in wässrigem Medium mit der Verbindung, die ein Element der 2. Hauptgruppe des Periodensystems umfasst, umzusetzen sein. Die Reaktionsprodukte sollten Eigenschaften wie eine hohe thermische Stabilität, eine ausgeprägt Feinstrukturierung, eine große spezifische Oberfläche BET und eine große Porosität aufweisen. Die verwendeten Einsatzstoffe sollten möglichst preiswert und technisch verfügbar sein.

Weiterhin besteht eine Aufgabe darin, ein Verfahren zur Herstellung von Reaktionsprodukten mit Eigenschaften wie einer hohen thermischen Stabilität, einer ausgeprägten Feinstrukturierung, einer großen spezifischen Oberfläche BET und einer großen Porosität aus einer reaktiven Al- und Si-Verbindung und einer Verbindung, die ein Element der 2. Hauptgruppe des Periodensystems umfasst, bereitzustellen. Dabei sollte in einem Verfahrensschritt die Al- und Si-Verbindung z.B. durch thermische Aktivierung in eine reaktive Form überführt werden und diese in einem folgenden Verfahrensschritt unter einfach zu realisierenden Bedingungen, wie z.B. in wässrigem Medium, mit einer Verbindung, die ein Element der 2. Hauptgruppe des Periodensystems umfasst, umgesetzt werden.

Eine weitere Aufgabe besteht in der Bereitstellung von Verwendungsmöglichkeiten für Reaktionsprodukte mit einer hohen thermischen Stabilität, einer ausgeprägten Feinstrukturierung, einer großen spezifischen Oberfläche BET und einer großen Porosität, welche durch eine Reaktion zwischen einer Al- und Si-Verbindung und einer Verbindung, die ein Element der 2. Hauptgruppe des Periodensystems umfasst, hergestellt wurden.

Diese Aufgaben werden durch die Gegenstände der unabhängigen Patentansprüche gelöst. Überraschender Weise konnte gezeigt werden, dass sich entsprechende Reaktionsprodukte z.B. durch die Verwendung von Kaolin als Quelle für reaktives Al und reaktives Si bereitstellen lassen. Dieses wird in einem vorausgehenden Verfahrensschritt thermisch aktiviert und erfindungsgemäß zu Metakaolin umgesetzt. Dieses ist in wässriger Suspension hydrothermal oder aber auch atmosphärisch bei erhöhter Temperatur mit alkalischen Reaktionspartnern umsetzbar, welche Elemente der 2. Hauptgruppe enthalten. Die resultierenden Reaktionsprodukte zeichnen sich durch eine hohe thermische Stabilität, eine ausgeprägte Feinstrukturierung, eine große spezifische Oberfläche BET und eine große Porosität aus.

Ein wesentlicher Aspekt der Erfindung sind daher Reaktionsprodukte aus einer Reaktion in wässrigem Medium zwischen einer reaktiven Al-Si-Verbindung und einer Verbindung, die ein Element der 2. Hauptgruppe des Periodensystems umfasst, wobei die reaktive Al-Si-Verbindung thermisch aktiviert ist und die Reaktionsprodukte eine thermische Stabilität bis > 500 °C und eine ausgeprägte Feinstrukturierung und/oder eine spezifische Oberfläche BET > 5 m²/g und/oder eine große Porosität mit einer durchschnittlichen Porenweite < 100 nm aufweisen.

Diese Reaktionsprodukte, welche aus der Umsetzung eines einzigen reaktiven Rohstoffs, welcher sowohl reaktives Aluminium als auch reaktives Silizium enthält, mit einer Verbindung, die Elemente der zweiten Hauptgruppe des Periodensystems (z.B. Calcium und/oder Magnesium) enthält, in wässriger Umgebung ggf. bei erhöhter Temperatur und optional bei erhöhtem Druck resultieren, sind bisher nicht bekannt. Ebenso sind weder ein Verfahren zu deren Herstellung noch Anwendungen für diese Reaktionsprodukte bekannt.

Die reaktive Al- und Si-Verbindung ist erfindungsgemäß thermisch aktiviertes Kaolin. Dieses wird durch eine sehr schnelle, kurzzeitige Behandlung bei hoher Temperatur zumindest teilweise in Metakaolin überführt. Das so hergestellt Metakaolin weist eine geblähte Struktur auf, wodurch die Ausbildung einer besonders porösen Struktur, welche die Basis für die die hohe thermische Stabilität, die ausgeprägte Feinstrukturierung und große spezifische Oberfläche BET der Reaktionsprodukte darstellt, zusätzlich unterstützt wird.

Kaolin ist ein natürlich vorkommender Rohstoff, welcher hauptsächlich aus dem Mineral Kaolinit besteht, welches sich u.a. durch seinen hohen Aluminiumgehalt, seine Feinteiligkeit und seine Plättchenform auszeichnet. Kaolinit besteht zu 39,5 Ma-% aus Al₂O₃ und 46,5 Ma-% aus SiO₂ sowie 14 Ma-% Kristallwasser. Der Kaolinitgehalt im Kaolin beträgt 10 bis nahezu 100 Ma-% bei sehr reinen Qualitäten. Kaolinit zeichnet sich u.a. dadurch aus, dass das Kristallwasser, beginnend bei etwa 550°C allmählich abgespalten wird. Der in einem Bereich von etwa 550°C bis etwa 900°C entwässerte Kaolin wird auch als Metakaolin bezeichnet und zeichnet sich durch eine besondere Reaktivität aus. Bei höheren Brenntemperaturen entsteht ein siliziumarmer Aluminium-Silizium-Spinell und bei Kalzinierung auf 1050°C wird die Spinellphase schließlich in Mullit und Cristobalit umgewandelt.

Metakaolin wird beispielsweise in indirekt oder direkt beheizten Drehrohröfen hergestellt. Hierbei wird Kaolin auf eine gewünschte Kalziniertemperatur gebracht und dabei entwässert. Der gesamte Prozess kann einige Minuten bis zu >1 h dauern. Erfindungsgemäß wird Kaolin innerhalb sehr kurzer Zeit (<< 1 min.) auf die Kalziniertemperatur gebracht und danach schnell (<< 5 min) auf eine Temperatur < 550°C) gebracht, was zu einer geblähten Struktur der Kaolinpartikel führt und zu einer Abnahme der Dichte von ursprünglich 2,6 g/ml auf bis zu 1,8 g/ml führen kann. Unabhängig vom Kalzinierverfahren wird zur Herstellung von Metakaolin in der Regel auf einen Glühverlust kalziniert, der <10 Ma-% liegt.

**Tabelle 1: Charakteristik Metakaolin**

| Parameter | Einheit | Bereich | Bevorzugt |
|---|---|---|---|
| Al₂O₃ | Ma-% | >20 | >25 |
| SiO₂ | Ma-% | <80 | <75 |
| Glühverlust | Ma-% | <10 | <8 |
| Kaolinit | Ma-% | <50 | <25 |
| Dichte | g/ml | <2,7 | 1,9-2,6 |
| Korngröße, µm* | Ma-% | | |
| 0-100 | Ma-% | > 98 | |
| 0-50 | Ma-% | | > 98 |

| | | | |
|---|---|---|---|
| *Äquivalentdurchmesser, ermittelt per Sedimentationsmethode, Sedigraph, Fa. Miromeritics Eine vergleichbare Reaktion zur Darstellung der gewünschten Reaktionsprodukte ist ohne die erfindungsgemäße thermische Aktivierung des Kaolins und die Überführung in Metakaolin innerhalb vertretbarer technischer und ökonomischer Rahmenbedingungen nicht möglich bzw. führt nicht zu den gewünschten Reaktionsprodukten mit den beschriebenen speziellen Eigenschaften. | | | |

In einer weiteren bevorzugten Ausführungsform der Reaktionsprodukte ist die Verbindung, die ein Element der 2. Hauptgruppe des Periodensystems umfasst, eine Ca-Verbindung und/oder Mg-Verbindung, welche bevorzugt CaO, MgO, Mg(OH)₂, Ca(OH)₂, CaCO₃ und/oder Mischungen dieser umfasst und/oder welche bevorzugt durch die thermische Behandlung von natürlichen Gesteinen, bevorzugt Kalkstein, wie beispielsweise Dolomit, Magnesit, Huntit oder andere, herstellbar ist.

Diese Verbindungen, die auch als alkalische Reaktionspartner bezeichnet werden, können beispielsweise CaO, CaO+MgO, CaCO₃+MgO und MgO umfassen. Mögliche Materialien sind Calciumoxid, Gemische aus Calciumoxid und Magnesiumoxid, Gemische aus Calciumcarbonat und Magnesiumoxid, sowie Magnesiumoxid, welche durch die thermische Behandlung von natürlichem Kalkstein, bzw. natürlichem Dolomit oder Huntit (vollkalziniert bzw. teilkalziniert) bzw. natürlichem Magnesit hergestellt wurden. Die daraus resultierenden Produkte wurden so ausgewählt und thermisch behandelt, dass eine hohe Reaktivität vorliegt. Mögliche und bevorzugte Charakteristika dieser Komponenten sind in den Tabellen 2 und 3 dargestellt.

**Tabelle 2: Charakteristik der eingesetzten Komponenten**

| Parameter | Einheit | CaO | CaO+MgO | CaCO₃+MgO | MgO |
|---|---|---|---|---|---|
| Mineralphasen | | | | | |
| Lime, CaO | Ma-% | >30 | >20 | <40 | <60 |
| Periklas, MgO | Ma-% | <10 | >10 | >5 | >20 |
| Calcit, CaCO₃ | Ma-% | <70 | <70 | <40 | <20 |
| Korngröße, µm** | | | | | |
| 0-5 mm | Ma-% | > 98 | >98 | > 98 | > 98 |

| | | | | | |
|---|---|---|---|---|---|
| ** Äquivalentdurchmesser, ermittelt per Laserbeugung, Cilas, Fa. Quantachrome | | | | | |

**Tabelle 3: Bevorzugte Charakteristik der eingesetzten Komponenten**

| Parameter | Einheit | CaO | CaO+MgO | CaCO₃+MgO | MgO |
|---|---|---|---|---|---|
| Mineralphasen | | | | | |
| Lime, CaO | Ma-% | >50 | >30 | <25 | <40 |
| Periklas, MgO | Ma-% | <10 | >20 | >10 | >30 |
| Calcit, CaCO₃ | Ma-% | <50 | <50 | <35 | <20 |
| Korngröße, µm** | | | | | |
| 0-1 mm | Ma-% | > 98 | > 98 | > 98 | > 98 |

| | | | | | |
|---|---|---|---|---|---|
| ** Äquivalentdurchmesser, ermittelt per Laserbeugung, Cilas, Fa. Quantachrome | | | | | |

Selbstverständlich ist es möglich und von den gewünschten Endprodukteigenschaften abhängig, die Reaktionspartner durch entsprechende Reaktionsführung bei der thermischen Behandlung in die jeweils möglichen Zwischenstufen zu überführen und diese für die folgenden Verfahrensschritte zu verwenden.

Es ist weiterhin möglich, auch die Hydroxide der jeweiligen Oxide oder Mischungen der Oxide und Hydroxide, sowie auch andere Carbonate oder andere Bestandteile sowie Zuschläge wie z.B. Quarz oder Feldspat, andere Silikate, kristallin oder amorph, Aluminiumsilikate, Aluminate, Sulfate, andere Hydroxide oder Carbonate oder Oxide oder Metalle, oder Mischungen dieser, synthetisch oder natürlich in verschiedensten Partikelformen und -größen sowie weiterhin organische Bestandteile wie z.B. Rheologieadditive, Stabilisatoren, natürliche oder synthetische Fasern oder Kugeln oder andere Partikelformen als alkalischen Reaktionspartner bzw. alkalische Reaktionspartner zu verwenden, wobei diese Aufzählung keinerlei Einschränkung bedeutet. Weiterhin ist es möglich die Reaktionspartner durch entsprechende Reaktionsführung bei der thermischen Behandlung in die jeweils möglichen Zwischenstufen zu überführen und diese zu verwenden. Eine entsprechende Vorgehensweise ist von den gewünschten Endprodukteigenschaften abhängig, Im Falle der Verwendung der Hydroxide ist von einer stöchiometrischen Umsetzung der oben genannten Oxide bezogen auf die zugegebene Wassermenge und der entsprechenden Änderung der Massenanteilen auszugehen.

In einer bevorzugten Ausführungsform der Reaktionsprodukte sind daher die reaktive Al- und Si-Verbindung und die Verbindung, die ein Element der 2. Hauptgruppe des Periodensystems umfasst, in wässriger Suspension hydrothermal oder atmosphärisch bei erhöhter Temperatur miteinander umsetzbar.

Es ist möglich und abhängig von der Endanwendung vorteilhaft, den Prozess der Bildung der Reaktionsprodukte so zu führen, dass hierbei ein nasses, feuchtes oder trockenes Pulver entsteht, welches dann in einem oder mehreren nachfolgenden Schritten, ggf. mit anderen in dieser Erfindung bereits genannten Komponenten weiterverarbeitet wird.

In einer weiteren bevorzugten Ausführungsform der Reaktionsprodukte ist das Reaktionsprodukt in einem formgebenden Verfahren mit einem anorganischen oder organischen Bindemittel oder einer Mischung beider und/oder anderen Zusätzen, bevorzugt Wasser versetzt zu einem Formteil umsetzbar. Somit ist es möglich, den Prozess der Bildung der Reaktionsprodukte so zu führen, dass eine abhängig von der geplanten Endanwendung vorteilhafte Form des Reaktionsproduktes ausgebildet wird. Beispiele für mögliche vorteilhafte Formen sind z.B. Platte, Schicht, Quader oder andere Bauteilformen, wobei diese direkt nach dem Herstellungsprozess zunächst sowohl feucht als auch trocken sein können. Dieser Prozess der Herstellung von Formteilen kann abhängig von der Endanwendung auch zwei- oder mehrstufig durchgeführt werden. Dadurch ist es beispielsweise möglich, am jeweiligen Bestimmungs- oder Verwendungsort das in einer bestimmten Form geforderte Bauteil auszubilden.

Bevorzugt sind die Reaktionsprodukte durch ein thermisches Verfahren, bevorzugt durch Trocknung, zu einem Formteil umsetzbar.

Weiterhin sind weitere Veredelungen der Reaktionsprodukte oder der gebildeten Formteile möglich. Beispielsweise durch Beschichtung, thermische Behandlung, Dotierung und andere. Hierzu ist es möglich (abhängig von der Endanwendung), die Reaktionsprodukte oder die gebildeten Formteile im Rahmen deren jeweiligen Herstellung oder in nachgeschalteten Veredelungsprozessen mit anderen Materialien zu versetzen. Dies können z.B. anorganische und/oder organische, feste, flüssige oder gasförmige Substanzen wie z.B. Füllstoffe oder anderen Reaktionskomponenten wie Silikate, Oxide, Carbonate, Sulfate, Metalle, Additive wie z.B. Dispergiermittel, Rheologieadditive, Verdicker, Faserstoffe (organisch oder anorganisch), Bindemittel, Porosierungsmitteln usw. sein.

Beispielsweise können die beschriebenen Produkte mit einem anorganischen oder organischen Bindemittel (z.B. Stärke oder Methylcellulose) oder einer Mischung beider und/oder anderen Zusätzen, beispielsweise Wasser versetzt und gegebenenfalls unter zusätzlicher Verwendung formgebender Verfahren Bauteile hergestellt werden, die z.B. durch thermische Verfahren (Trocknung) verfestigt werden. Diese Bauteile enthalten Reaktionsprodukte, die sich durch geschlossene Luftkammern von 100 µm bis weniger als 10 µm bis hin zu weniger als 1 µm bis hin zu 200 nm Porendurchmesser und Wandstärken von bis zu 50 nm und weniger auszeichnen und z.B. als Wärmedämmmaterial verwendet werden können.

Weiterhin sind weitere Veredelungen möglich, z.B. durch mechanische oder hydromechanische Behandlung. Dies kann beispielsweise einer formgebenden Nachbearbeitung dienen.

In einer weiteren bevorzugten Ausführungsform der Reaktionsprodukte weist das die Reaktionsprodukte enthaltende Formteil geschlossene Luftkammern mit einem Porendurchmesser von 100 µm, bevorzugt weniger als 10 µm, bevorzugt weniger als 1 µm, besonders bevorzugt weniger als 200 nm und bevorzugt Wandstärken von weniger als 50 nm auf.

Durch diese Eigenschaften ist ein die Reaktionsprodukte enthaltendes Formteil bevorzugt als Wärmedämmmaterial verwendbar.

Die Reaktionsprodukte können weiterhin verwendet werden z.B. zur Herstellung von Papier, Farbe, Polymeren, in Bauanwendungen, als Feuerfestmaterial, Keramik, in der Wasseraufbereitung, zur Luftreinigung oder für Katalysatoren. Die besonderen Vorteile liegen z.B. in den Eigenschaften: nicht brennbar, hoher Weißgrad, niedrige Dichte, hohe spezifische Oberfläche, niedriges Schüttgewicht, hohe Ad- und Absorptionskapazität, hohes Volumen, hohe Deckkraft, hohe Porosität, hoher Erweichungs- und Schmelzpunkt, hohe innere Festigkeit, definierte Porenstruktur, geschlossene Poren <500 nm und variable Korngröße.

Ein weiterer wesentlicher Aspekt der Erfindung ist ein Verfahren zur Herstellung von Reaktionsprodukten, welche eine thermische Stabilität bis > 500_{°}C und eine ausgeprägte Feinstrukturierung und eine spezifische Oberfläche BET > 5 m²/g und/oder eine große Porosität mit einer durchschnittlichen Porenweite < 100 nm aufweisen, aus einer reaktiven Al-Si-Verbindung und einer Verbindung, die ein Element der 2. Hauptgruppe des Periodensystems umfasst, wobei in einem Verfahrensschritt die Al-Si-Verbindung thermisch aktiviert und in eine reaktive Form überführt wird und in einem folgenden Verfahrensschritt in wässrigem Medium mit einer Verbindung, die ein Element der 2. Hauptgruppe des Periodensystems umfasst, umgesetzt wird.

Die verwendete Al- und Si-Verbindung ist Kaolin welches zur thermischen Aktivierung erfindungsgemäß in Metakaolin überführt wird. Weiter bevorzugt ist eine Variante des Verfahrens, wobei die thermisch aktivierte Al- und Si-Verbindung mit einer Ca-Verbindung und/oder Mg-Verbindung umgesetzt wird, welche bevorzugt CaO, MgO und/oder CaCO₃ umfasst und/oder welche bevorzugt durch die thermische Behandlung von natürlichen Gesteinen, bevorzugt Kalkstein, wie beispielsweise Dolomit, Magnesit, Huntit oder andere, hergestellt worden ist.

In einer weiteren bevorzugten Variante des Verfahrens wird die thermisch aktivierte Al- und Si-Verbindung mit einer Ca-Verbindung und/oder Mg-Verbindung umgesetzt, welche bevorzugt CaO, MgO und/oder CaCO₃ umfasst und/oder welche bevorzugt durch eine vorgeschaltete thermische Behandlung von natürlichen Gesteinen, bevorzugt Kalkstein, wie beispielsweise Dolomit, Magnesit oder andere, hergestellt worden ist.

Bevorzugt ist ein Verfahren, wobei die reaktive Al- und Si-Verbindung und die Verbindung, die ein Element der 2. Hauptgruppe des Periodensystems umfasst, in wässriger Suspension hydrothermal oder atmosphärisch bei erhöhter Temperatur, bevorzugt > 0°C, bevorzugt > 20°C, bevorzugt > 30°C, besonders bevorzugt > 50°C miteinander umgesetzt werden. Weiter bevorzugt ist eine Variante des Verfahrens, bei der das Reaktionsprodukt in einem formgebenden Verfahren mit einem anorganischen oder organischen Bindemittel oder einer Mischung beider und/oder anderen Zusätzen, bevorzugt Wasser versetzt zu Formteilen umgesetzt wird.

Weiterhin bevorzugt ist ein Verfahren, in dem das Reaktionsprodukt durch ein thermisches Verfahren, bevorzugt durch Trocknung, zu Formteilen umgesetzt wird.

In einer weiteren bevorzugten Variante des Verfahrens wird das Reaktionsprodukt zu einem Formteil umgesetzt, welches geschlossene Luftkammern mit einem Porendurchmesser von 100 µm bevorzugt weniger als 10 µm, bevorzugt weniger als 1 µm, besonders bevorzugt weniger als 200 nm und bevorzugt Wandstärken von weniger als 50 nm aufweist.

Ein weiterer Wesentlicher Aspekt der Erfindung ist die Verwendung eines Reaktionsproduktes aus einer Reaktion in wässrigem Medium zwischen einer reaktiven Al-Si-Verbindung und einer Verbindung, die ein Element der 2. Hauptgruppe des Periodensystems umfasst, wobei die reaktive Al-Si-Verbindung thermisch aktiviert ist und die Reaktionsprodukte eine thermische Stabilität bis > 500 °C und eine ausgeprägte Feinstrukturierung und eine spezifische Oberfläche BET > 5 m²/g und/oder eine große Porosität mit einer durchschnittlichen Porenweite < 100 nm aufweisen, als Wärmedämmmaterial.

Bevorzugt erfolgt die Verwendung des Reaktionsproduktes dadurch, dass es in Papier, Farbe, Polymeren, Baumaterial, Feuerfestmaterial, Keramik, Wasseraufbereitungseinrichtungen, Luftreinigungseinrichtungen oder Katalysatoren zugesetzt wird.

### Vergleichsbeispiel 1:

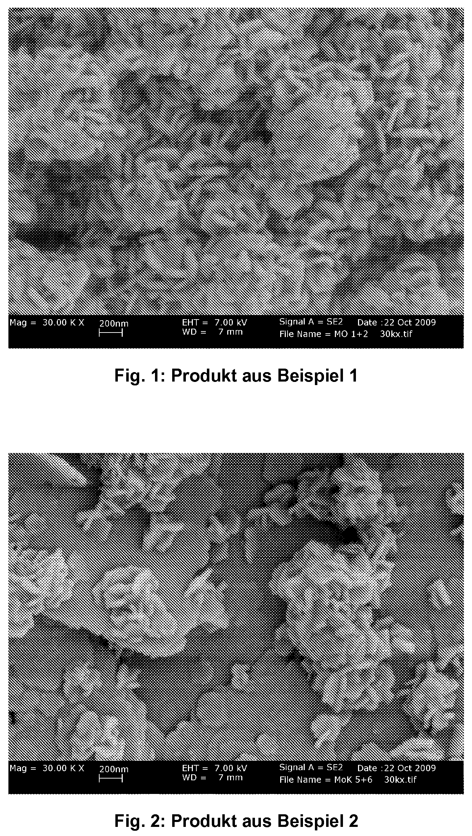

10 g technisches MgO-Pulver werden mit 50 ml Wasser gemischt und 1 h bei 200 °C / 16 bar autoklaviert. Es bildet sich Mg(OH)₂. Im Rasterelektronenmikroskop (REM) sind deutlich gut ausgebildete sechseckige Kristallstrukturen von etwa 100-400 nm zu erkennen (Fig. 1).

### Vergleichsbeispiel 2:

5 g technisches MgO-Pulver und 5 g technisches Kaolinpulver werden mit 50 ml Wasser gemischt und 1 h bei 200°C / 16 bar autoklaviert. Es bildet sich Mg(OH)₂. Im Rasterelektronenmikroskop (REM) sind deutlich gut ausgebildete sechseckige Kristallstrukturen zu erkennen. Die Magnesiumhydroxidkristalle befinden sich neben und auf den Kaolinplättchen und sind zum Teil fest mit dem Kaolin verbunden. Das Kaolin selbst zeigt mittels Röntgendiffraktion und REM keine Veränderungen (Fig. 2).

### Beispiel 3:

Technisches CaO-Pulver (C) und kurzzeitig erhitztes Metakaolin (MK) werden in den in Tabelle 4 angegebenen Mengenanteilen mit jeweils 30 ml deionisiertem (DI) Wasser gemischt und 1 h bei 200°C / 16 bar autoklaviert.

**Tabelle 4: Versuchstabelle, Beispiel 3**

| | | 1 | 2 | 3 | 4 | 5 |
|---|---|---|---|---|---|---|
| Teile | | 9C+1MK | 7C+3 MK | 5C+5 MK | 3C+7 MK | 1 C+9 MK |
| Einwaage | C, g | 5,4 | 4,2 | 3,0 | 1,8 | 0,6 |
| Einwaage | MK, g | 0,6 | 1,8 | 3,0 | 4,2 | 5,4 |
| DI Wasser | ml | 30 | 30 | 30 | 30 | 30 |

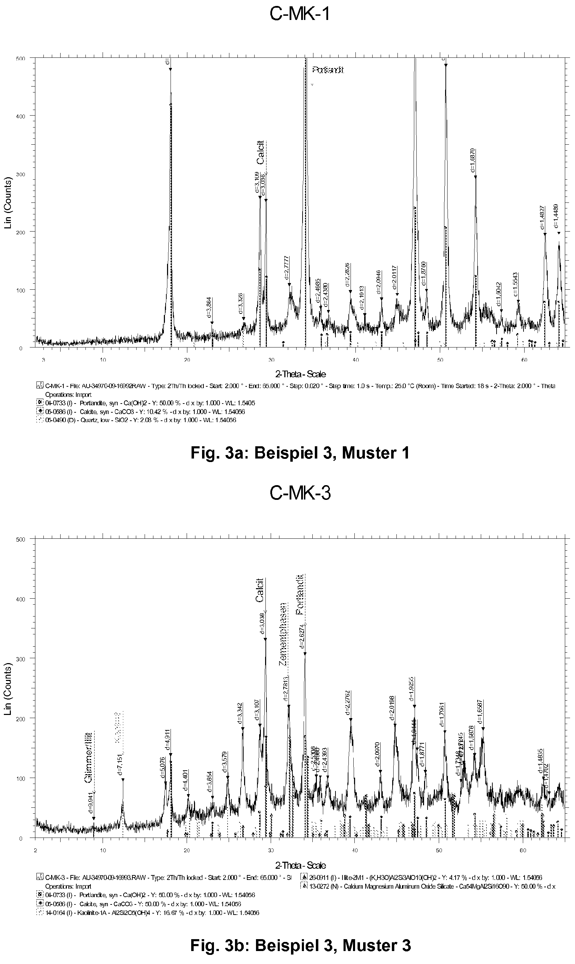

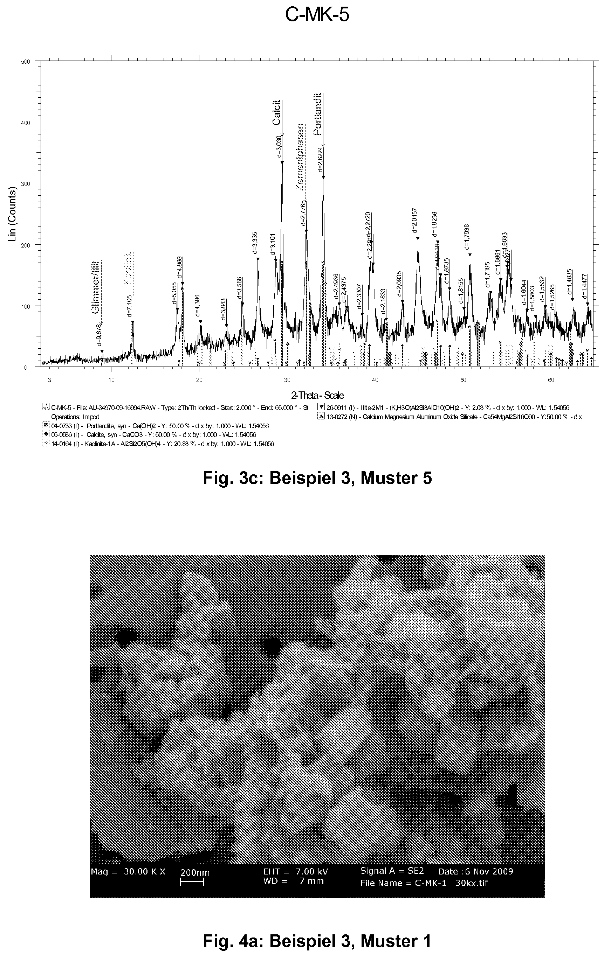

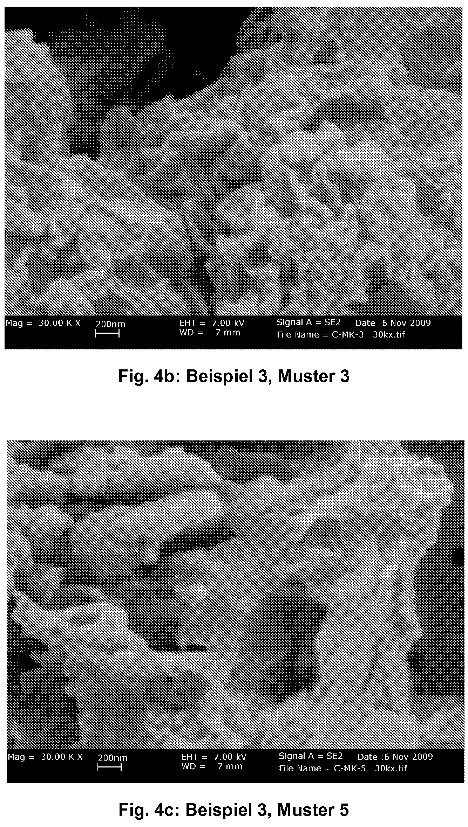

Den Diffraktogrammen sowie den REM-Aufnahmen zufolge (hier als Beispiel Fig. 3a bis 3c und Fig. 4a bis 4c) kommt es in allen Fällen zu einer Reaktion von CaO bzw. Ca(OH)₂ mit Metakaolin unter Bildung neuer, unregelmäßiger Strukturen.

### Beispiel 4:

Eine Mischung aus pulverförmigen CaO und MgO, hergestellt aus der thermischen Behandlung von Dolomit (V, Vollkalzinat) und kurzzeitig erhitztes Metakaolin (MK) werden in den in Tabelle 5 angegebenen Mengenanteilen mit Wasser gemischt und 1 h bei 200°C / 16 bar autoklaviert. Parallel dazu wird eine zweite Versuchsreihe bei 90-100 °C über einen Zeitraum von 4 h, aber ohne Überdruck behandelt.

**Tabelle 5: Versuchstabelle, Beispiel 4**

| | | 1 | 2 | 3 | 4 | 5 |
|---|---|---|---|---|---|---|
| | | atmos. / autoklav. | atmos. / autoklav. | atmos. / autoklav. | atmos. / autoklav. | atmos. / autoklav. |
| Teile | | 9V+1 MK | 7V+3 MK | 5V+5 MK | 3V+7 MK | 1 V+9 MK |
| Einwaage | V, g | 2,7 | 2,1 | 1,5 | 0,9 | 0,3 |
| Einwaage | MK, g | 0,3 | 0,9 | 1,5 | 2,1 | 2,7 |
| DI Wasser | ml | 15 | 15 | 15 | 15 | 15 |

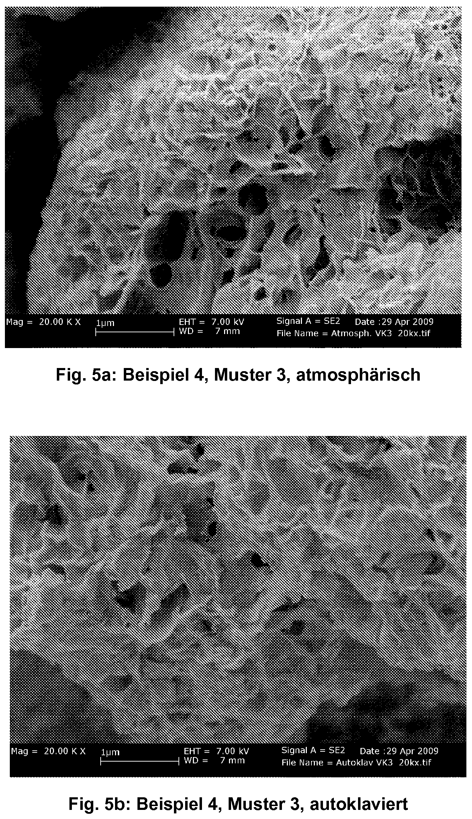

Den REM-Aufnahmen zufolge (hier als Beispiel Fig. 5a und Fig. 5b) kommt es in allen Fällen zu einer Reaktion von CaO bzw. Ca(OH)₂ / MgO bzw. Mg(OH)₂ mit Metakaolin unter Bildung neuer Strukturen. Dies ist sowohl bei Normaldruck als auch bei Überdruck der Fall. Es zeigt sich, dass die REM-Strukturen im Vergleich zu Beispiel 3 regelmäßiger werden und vergleichbar einem porösen Schwamm sind.

### Beispiel 5:

Eine Mischung aus pulverförmigen CaCO₃ und MgO, hergestellt aus der thermischen Behandlung von Dolomit (T, Teilkalzinat) und kurzzeitig erhitztes Metakaolin (MK) werden in den in Tabelle 6 angegebenen Mengenanteilen mit Wasser gemischt und 1 h bei 200°C / 16 bar autoklaviert. Parallel dazu wird eine zweite Versuchsreihe bei 90-100 °C über einen Zeitraum von 4 h, aber ohne Überdruck behandelt.

**Tabelle 6: Versuchstabelle, Beispiel 5**

| | | 1 | 2 | 3 | 4 | 5 |
|---|---|---|---|---|---|---|
| | | atmos. / autoklav. | atmos. / autoklav. | atmos. / autoklav. | atmos. / autoklav. | atmos. / autoklav. |
| Teile | | 9T+1MK | 7T+3 MK | 5T+5 MK | 3T+7 MK | 1T+9 MK |
| Einwaage | T, g | 2,7 | 2,1 | 1,5 | 0,9 | 0,3 |
| Einwaage | MK, g | 0,3 | 0,9 | 1,5 | 2,1 | 2,7 |
| DI Wasser | ml | 15 | 15 | 15 | 15 | 15 |

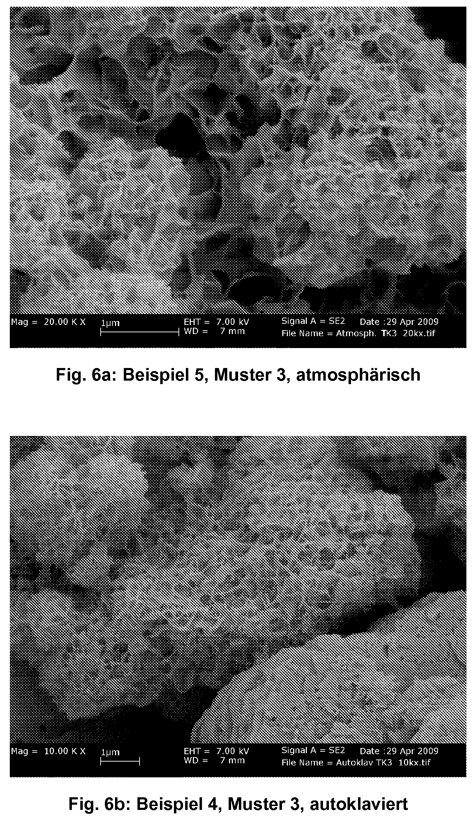

Den REM-Aufnahmen zufolge (hier als Beispiel Fig. 6a und Fig. 6b) kommt es in allen Fällen zu einer Reaktion von MgO bzw. Mg(OH)₂ mit Metakaolin unter Bildung neuer Strukturen. Dies ist sowohl bei Normaldruck als auch bei Überdruck der Fall. Es zeigt sich, dass die REM-Strukturen noch mal regelmäßiger werden als im Beispiel 4 und vergleichbar einem porösen Schwamm sind. CaCO₃-Partikel sind lose als mikroskalige, inerte Partikel in dem Reaktionsprodukt enthalten.

### Beispiel 6:

Technisches MgO-Pulver (M) und kurzzeitig erhitztes Metakaolin (MK) werden in den in Tabelle 7 angegebenen Mengenanteilen mit Wasser gemischt und 1 h bei 200°C / 16 bar autoklaviert. Parallel dazu wird eine zweite Versuchsreihe bei 90-100°C über einen Zeitraum von 4 h, aber ohne Überdruck behandelt.

**Tabelle 7: Versuchstabelle, Beispiel 6**

| | | M1 | M2 | M3 | M4 | M5 |
|---|---|---|---|---|---|---|
| | | atmos. | atmos. / autokl. | atmos. / autokl. | atmos. | atmos. |
| Teile | | 9M+1MK | 7M+3 MK | 5M+5 MK | 3M+7 MK | 1M+9 MK |
| Einwaage | M, g | 2,7 | 2,1 | 1,5 | 0,9 | 0,3 |
| Einwaage | MK, g | 0,3 | 0,9 | 1,5 | 2,1 | 2,7 |
| DI Wasser | ml | 15 | 15 | 15 | 15 | 15 |

### Tabelle 7: Versuchstabelle, Beispiel 6

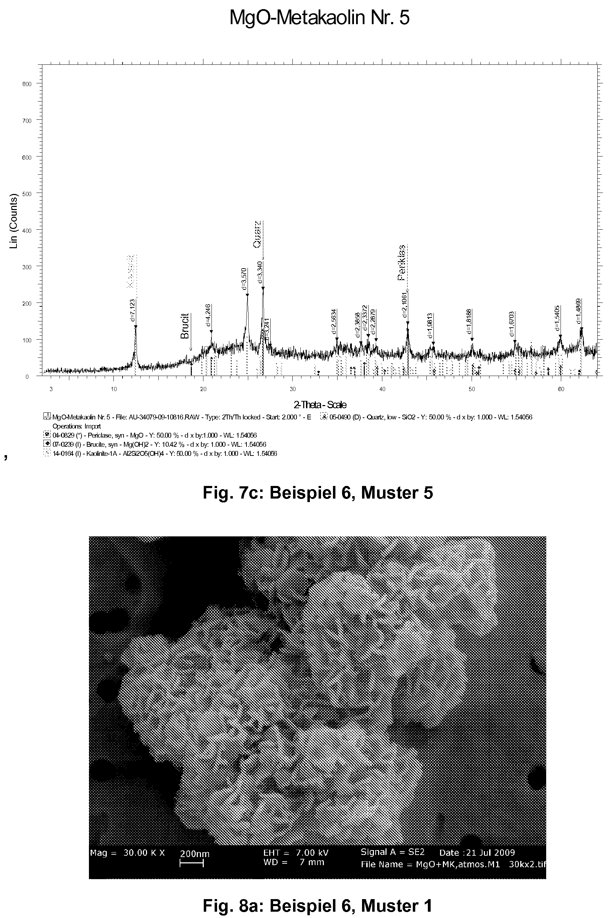

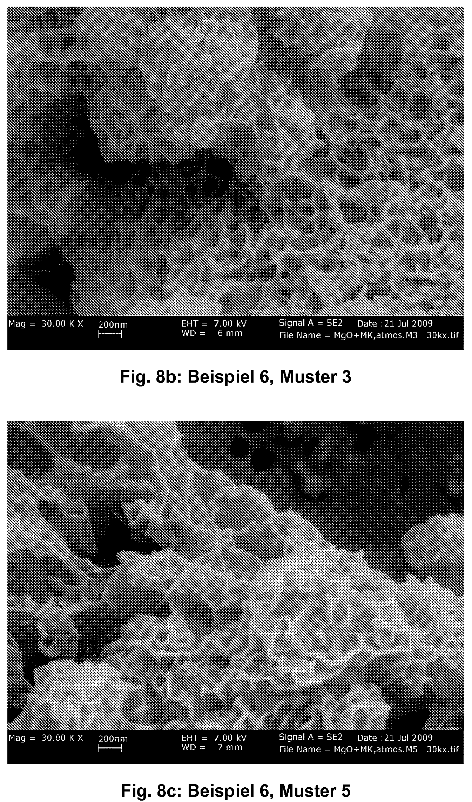

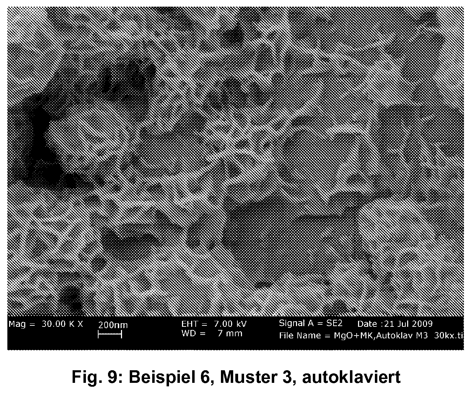

Den REM-Aufnahmen zufolge (hier als Beispiel Fig. 8a bis 8c und Fig. 9) kommt es auch hier in allen Fällen zu einer Reaktion von MgO bzw. Mg(OH)₂ mit Metakaolin unter Bildung neuer Strukturen. Dies ist sowohl bei Normaldruck als auch bei Überdruck der Fall. Es zeigt sich, dass die REM-Strukturen nochmals regelmäßiger werden als im Beispiel 5 und vergleichbar einem porösen Schwamm sind.

In allen Versuchen kam es bei der Verwendung der beschriebenen Ca- und/oder Mg-Komponenten mit Metakaolin in wässriger Suspension bei erhöhter Temperatur sowohl bei Normaldruck als auch bei Überdruck zu einer Reaktion unter Ausbildung neuer Strukturen, die im REM untersucht werde konnten. Die Reaktionsprodukte zeichnen sich u.a. durch die in den nachfolgenden Tabellen 8.1 bis 8.4 angegebenen Charakteristika aus:

**Tabelle 8.1: Bei Reaktion von CaO mit Metakaolin:**

| Parameter | Einheit | Bereich | Bevorzugt |
|---|---|---|---|
| Chem. Analyse** | | | |
| CaO | Ma-% | 1-100 | 5-95 |
| MgO | Ma-% | <50 | <25 |
| Al₂O₃ | Ma-% | 1-100 | 5-95 |
| SiO₂ | Ma-% | 1-100 | 5-95 |
| Glühverlust, 1000°C* | Ma-% | 1-50 | 1-30 |
| Schüttdichte | g/ml | <1000 | <500 |
| Dichte | g/ml | <3,5 | <3,0 |
| BET | m²/g | >5 | >10 |
| Sinterpunkt | °C | >600 | >800 |
| Schmelzpunkt | °C | >800 | >1000 |
| Korngröße, mm | | | |
| 0-5 | Ma-% | 100 | |
| 0-1 | Ma-% | | 100 |
| durchschnittliche Porenweite (Adsorption BET) | Angström | <1000 | <500 |

| | | | |
|---|---|---|---|
| * bezogen auf die bei 100 °C getrocknete Probe ** Chemische Analyse, Ma-%, hier bezogen auf die geglühte Probe, DIN 51001 | | | |

**Tabelle 8.2: Bei Reaktion von CaO-MgO mit Metakaolin**

| Parameter | Einheit | Bereich | Bevorzugt |
|---|---|---|---|
| Chem. Analyse** | | | |
| CaO | Ma-% | 1-100 | 5-95 |
| MgO | Ma-% | 1-100 | 5-95 |
| Al₂O₃ | Ma-% | 1-100 | 5-95 |
| SiO₂ | Ma-% | 1-100 | 5-95 |
| Glühverlust, 1000°C* | Ma-% | 1-50 | 1-30 |
| Schüttdichte | g/ml | <1000 | <500 |
| Dichte | g/ml | <3,5 | <3,0 |
| BET | m²/g | >5 | >10 |
| Sinterpunkt | °C | >600 | >800 |
| Schmelzpunkt | °C | >800 | >1000 |
| Korngröße, mm | | | |
| 0-5 | Ma-% | 100 | |
| 0-1 | Ma-% | | 100 |
| durchschnittliche Porenweite (Adsorption BET) | Angström | <1000 | <500 |

| | | | |
|---|---|---|---|
| * bezogen auf die bei 100 °C getrocknete Probe ** Chemische Analyse, Ma-%, hier bezogen auf die geglühte Probe, DIN 51001 | | | |

**Tabelle 8.3: Bei Reaktion von CaCO₃+MgO mit Metakaolin**

| Parameter | Einheit | Bereich | Bevorzugt |
|---|---|---|---|
| Chem. Analyse** | | | |
| CaO | Ma-% | 1-100 | 5-95 |
| MgO | Ma-% | 1-100 | 5-95 |
| Al₂O₃ | Ma-% | 1-100 | 5-95 |
| SiO₂ | Ma-% | 1-100 | 5-95 |
| Glühverlust, 1000°C* | Ma-% | 1-50 | 1-30 |
| Schüttdichte | g/ml | <1000 | <500 |
| Dichte | g/ml | <3,5 | <3,0 |
| BET | m²/g | >5 | >10 |
| Sinterpunkt | °C | >600 | >800 |
| Schmelzpunkt | °C | >800 | >1000 |
| Korngröße, mm | | | |
| 0-5 | Ma-% | 100 | |
| 0-1 | Ma-% | | 100 |
| durchschnittliche Porenweite (Adsorption BET) | Angström | <1000 | <500 |

| | | | |
|---|---|---|---|
| * bezogen auf die bei 100°C getrocknete Probe ** Chemische Analyse, Ma-%, hier bezogen auf die geglühte Probe, DIN 51001 | | | |

**Tabelle 8.4: Bei Reaktion von MgO mit Metakaolin**

| Parameter | Einheit | Bereich | Bevorzugt |
|---|---|---|---|
| Chem. Analyse** | | | |
| CaO | Ma-% | <50 | <25 |
| MgO | Ma-% | 1-100 | 5-95 |
| Al₂O₃ | Ma-% | 1-100 | 5-95 |
| SiO₂ | Ma-% | 1-100 | 5-95 |
| Glühverlust, 1000°C* | Ma-% | 1-50 | 1-30 |
| Schüttdichte | g/ml | <1000 | <500 |
| Dichte | g/ml | <3,5 | <3,0 |
| BET | m²/g | >5 | >10 |
| Sinterpunkt | °C | >600 | >800 |
| Schmelzpunkt | °C | >800 | >1000 |
| Korngröße, mm | | | |
| 0-5 | Ma-% | 100 | |
| 0-1 | Ma-% | | 100 |
| durchschnittliche Porenweite (Adsorption BET) | Angström | <1000 | <500 |

| | | | |
|---|---|---|---|
| * bezogen auf die bei 100°C getrocknete Probe ** Chemische Analyse, Ma-%, hier bezogen auf die geglühte Probe, DIN 51001 | | | |

Abweichungen durch etwaige Zuschläge im Rahmen einer modifizierten erfindungsgemäßen Produktion (siehe unten) sind hier nicht aufgeführt. Ebenfalls sind Änderungen der Parameter durch einen Folgeprozess, z.B. einer thermischen Nachbehandlung nicht aufgeführt. Diese Option ist jedoch ebenfalls Teil der Erfindung.

Die Reaktionsprodukte weisen bevorzugt die in Tabellen 9a - 9c angegebenen Eigenschaften auf. Tabelle 9c zeigt den maximalen Anteil (in Ma-%) der eingesetzten Mineralien, welche nach der Reaktion noch unverändert in dieser Form vorliegen. Bevorzugt liegen die Reaktionsprodukte nicht als homogene Einkristalle vor. Wie in den Figuren 3 - 9 zu erkennen ist, zeichnen sich die Reaktionsprodukte insbesondere durch die unregelmäßige Anordnung und Größe der Poren und der Porenwände aus.

**Tabelle 9a: Physikalisch Eigenschaften**

| Eigenschaft | Wert | bevorzugt | besonders bevorzugt |
|---|---|---|---|
| BET (m²/g) | 5-500 | 10-400 | 20-300 |
| thermische Stabilität (°C) | > 500 | > 700 | > 900 |
| Porenwandstärke (nm, bestimmt durch REM) | < 500 | < 200 | < 100 |
| Porendurchmesser (nm, bestimmt durch REM) | < 1000 | < 750 | < 500 |

**Tabelle 9b: Chemische Zusammensetzung der Reaktionsprodukte**

| Element | Wert (Ma-%)* | bevorzugt (Ma-%)* | besonders bevorzugt (Ma-%)* |
|---|---|---|---|
| Anteil des eingesetzten Minerals oder eingesetzter Minerale, ein Element der 2. HG umfassend | 1-99 | 5-95 | 10-90 |
| Anteil Si angegeben als SiO₂ | 20-90 | 30-80 | 40-70 |
| Anteil Al angegeben als Al₂O₃ | 10-80 | 20-70 | 30-60 |
| Restbestandteile | 0,01-20 | 0,05-15 | 0,1-10 |

| | | | |
|---|---|---|---|
| * Chemische Analyse, Ma-%, hier bezogen auf die geglühte Probe, DIN 51001 | | | |

**Tabelle 9c: Mineralogische Zusammensetzung der Reaktionsprodukte**

| Bestandteil | Anteil | bevorzugt | besonders bevorzugt |
|---|---|---|---|
| Anteil Rest-Kaolin (Ma-%) | < 30 | < 20 | <10 |
| Anteil Edukt, Element der zweiten Hauptgruppe (Ma-%) | < 50 | < 40 | < 30 |

Weitere Vorteile und Ausführungsformen ergeben sich aus den beigefügten Zeichnungen:
Darin zeigen:
- Fig. 1: eine rasterelektronenmikroskopische Aufnahme des Produkts aus Beispiel 1;
- Fig. 2: eine rasterelektronenmikroskopische Aufnahme des Produkts aus Beispiel 2;
- Fig. 3a - 3c: Diffraktogramme der Reaktionsprodukte (Muster 1-3) aus Beispiel 3;
- Fig. 4a - 4c: rasterelektronenmikroskopische Aufnahmen der Reaktionsprodukte (Muster 1-3) aus Beispiel 3;
- Fig. 5a: eine rasterelektronenmikroskopische Aufnahme eines Reaktionsprodukts (Muster 3) aus Beispiel 4, welches nicht autoklaviert wurde;
- Fig. 5b: eine rasterelektronenmikroskopische Aufnahme eines Reaktionsprodukts (Muster 3) aus Beispiel 4, welches autoklaviert wurde;
- Fig. 6a: eine rasterelektronenmikroskopische Aufnahme eines Reaktionsprodukts (Muster 3) aus Beispiel 5, welches nicht autoklaviert wurde;
- Fig. 6b: eine rasterelektronenmikroskopische Aufnahme eines Reaktionsprodukts (Muster 3) aus Beispiel 5, welches autoklaviert wurde;
- Fig. 7a - 7c: Diffraktogramme der Reaktionsprodukte (Muster 1, 3 und 5) aus Beispiel 6;
- Fig. 8a - 8c: rasterelektronenmikroskopische Aufnahmen der Reaktionsprodukte (Muster 1, 3 und 5) aus Beispiel 6;
- Fig. 9: eine weitere rasterelektronenmikroskopische Aufnahme eines Reaktionsprodukts (Muster 3) aus Beispiel 6, welches autoklaviert wurde;

Figur 1 zeigt eine rasterelektronenmikroskopische Aufnahme des Produkts aus Beispiel 1. Das gebildete Mg(OH)₂ ist deutlich in Form von charakteristische ausgebildeten sechseckigen Kristallen von etwa 100-400 nm zu erkennen.

Figur 2 zeigt eine rasterelektronenmikroskopische Aufnahme des Produkts aus Beispiel 2. Es sind deutlich gut ausgebildete sechseckige Kristallstrukturen zu erkennen, welche auf nicht umgesetztes Mg(OH)₂ hinweisen. Es befinden sich Magnesiumhydroxidkristalle neben und auf den Kaolinplättchen, welche zum Teil fest mit dem Kaolin verbunden sind. Das Kaolin selbst erscheint gegenüber nicht mit Mg(OH)versetzen Proben in der Struktur unverändert.

Figuren 3a - 3c zeigen Diffraktogramme der Reaktionsprodukte (Muster 1-3) aus Beispiel 3. Diese zeigen anhand der Muster 1-3 beispielhaft, dass es bei der Reaktionsführung nach Beispiel 3 zu einer Reaktion zwischen Metakaolin und CaO- bzw. Ca(OH)₂-Pulver kommt.

Figuren 4a - 4c zeigen rasterelektronenmikroskopische Aufnahmen der Reaktionsprodukte (Muster 1-3) aus Beispiel 3, die ebenso wie die Figuren 3a - 3c eine erfolgte Reaktion zwischen Metakaolin und CaO- bzw. Ca(OH)₂-Pulver belegen. Im Vergleich zu den in den Fig. 1 und 2 gezeigten Proben kommt es bei einer Prozessführung nach Beispiel 3 zu einer Ausbildung neuer, unregelmäßiger Strukturen.

Figur 5a zeigt eine rasterelektronenmikroskopische Aufnahme eines Reaktionsprodukts (Muster 3) aus Beispiel 4, welches nicht autoklaviert wurde und Figur 5b eine rasterelektronenmikroskopische Aufnahme eines Reaktionsprodukts (Muster 3) aus Beispiel 4, welches jedoch autoklaviert wurde. Es ist zu erkennen, dass es sowohl bei Normaldruck als auch bei der Überdruckbehandlung im Autoklaven zur Bildung neuer Strukturen kommt, welche auf eine erfolgte Reaktion hinweisen. Die ausgebildeten Strukturen sind in beiden Fällen regelmäßiger als diejenigen, die nach einer Prozessführung nach Beispiel 3 beobachtet werden können. Die Struktur der erhaltenen Produkte bei einer Prozessführung nach Beispiel 4 ähnelt derjenigen eines porösen Schwamms.

Figur 6a zeigt eine rasterelektronenmikroskopische Aufnahme eines Reaktionsprodukts (Muster 3) aus Beispiel 5, welches nicht autoklaviert wurde und Figur 6b eine rasterelektronenmikroskopische Aufnahme eines Reaktionsprodukts (Muster 3) aus Beispiel 5, welches jedoch autoklaviert wurde. Ähnlich wie in Beispiel 4 (vgl. Fig. 5a und 5b) kommt es auch in Beispiel 5 zur Ausbildung neuer schwammartiger Strukturen, die auf eine erfolgte Reaktion hinweisen. Dies ist sowohl bei Normaldruck als auch bei Überdruck der Fall. Die Struktur erscheint jedoch noch regelmäßiger als bei einer Prozessführung nach Beispiel 4. CaCO₃-Partikel sind lose als mikroskalige, inerte Partikel in dem Reaktionsprodukt enthalten.

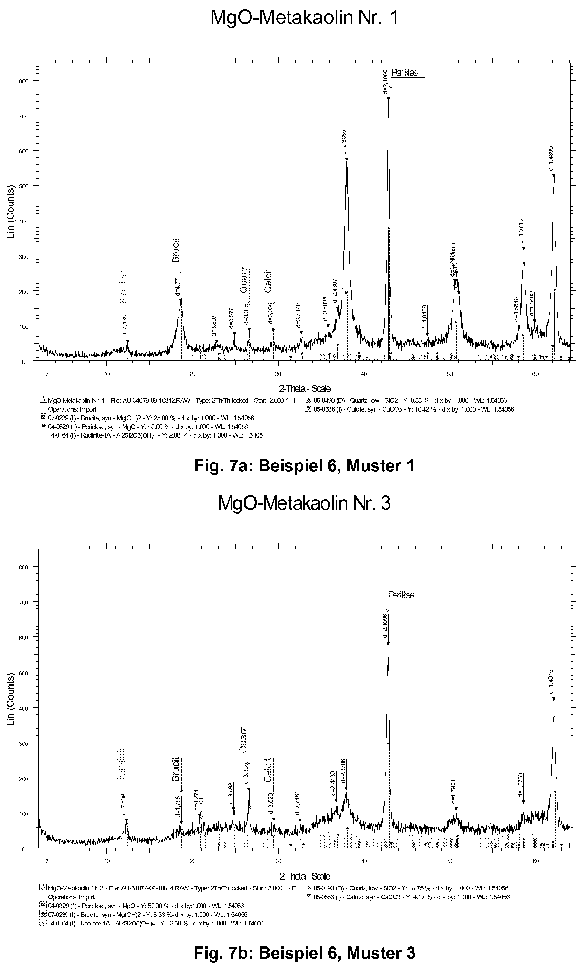

Figuren 7a - 7c zeigen Diffraktogramme der Reaktionsprodukte (Muster 1, 3 und 5) aus Beispiel 6. Diese zeigen beispielhaft anhand der Muster 1, 3 und 5, dass es bei der Reaktionsführung nach Beispiel 6 zu einer Reaktion zwischen Metakaolin und der Mg-Verbindung kommt.

Figuren 8a - 8c zeigen rasterelektronenmikroskopische Aufnahmen der Reaktionsprodukte (Muster 1, 3 und 5) aus Beispiel 6, die ebenso wie die Figuren 7a - 7c eine erfolgte Reaktion zwischen Metakaolin und der Mg-Verbindung belegen. Die Figuren zeigen dabei Reaktionsprodukte, welche ohne Autoklavieren erhalten wurden. Im Vergleich zu den in den Fig. 1 und 2 gezeigten Proben kommt es bei einer Prozessführung nach Beispiel 6 ebenso wie bei denen aus den Beispielen 3 - 5 zu einer Ausbildung neuer Strukturen. Auch bei der Prozessführung nach Beispiel 6 ähnelt die Struktur der erhaltenen Produkte derjenigen eines porösen Schwamms.

Figur 9 zeigt eine weitere rasterelektronenmikroskopische Aufnahme eines Reaktionsprodukts (Muster 3) aus Beispiel 6, welches autoklaviert wurde. Wie auch in dem analogen Verfahren welches jedoch ohne Behandlung im Autoklaven erfolgte und welches in Fig. 8b gezeigt ist, kommt es auch bei der zusätzlichen Behandlung im Autoklaven zur Ausbildung einer neuen, schwammartigen Struktur, welche eine große Oberfläche aufweist.

## Patentansprüche

1. Reaktionsprodukte aus einer Reaktion in wässrigem Medium zwischen Metakaolin einer Korngröße (d₉₈) ≤ 100 µm, einem Al₂O₃-Anteil > 20 Ma-%, einem SiO₂-Anteil < 80 Ma-%, einem Glühverlust <10 Ma-%, einem Kaolinit-Anteil < 50 Ma% und einer Dichte <2,7 g/ml und einem alkalischem Reaktionspartner, der ein Element der 2. Hauptgruppe des Periodensystems umfasst, wobei das Metakaolin durch Entwässern von Kaolin in einem Temperaturbereich von 550°C bis 900°C durch Bringen auf die Kalziniertemperatur innerhalb einer sehr kurzen Zeit << 1 min. und anschließendem schnellen Bringen auf eine Temperatur < 550°C in einer Zeit << 5 min thermisch aktiviert ist und die Reaktionsprodukte eine thermische Stabilität > 500°C und eine Feinstrukturierung mit einer spezifischen Oberfläche BET > 5 m²/g und/oder einer Porosität mit einer durchschnittlichen Porenweite < 100 nm aufweisen.

2. Reaktionsprodukte nach Anspruch 1,
**dadurch gekennzeichnet, dass**
der alkalische Reaktionspartner, der ein Element der 2. Hauptgruppe des Periodensystems umfasst, eine Ca-Verbindung und/oder Mg-Verbindung ist, welche bevorzugt CaO, MgO, Mg(OH)₂, Ca(OH)₂, CaCO₃ und/oder Mischungen dieser umfasst und/oder welche bevorzugt durch die thermische Behandlung von natürlichen Gesteinen, bevorzugt Kalkstein, wie beispielsweise Dolomit, Magnesit oder andere, herstellbar ist.

3. Reaktionsprodukte nach einem der Ansprüche 1 oder 2,
**dadurch gekennzeichnet, dass**
das Reaktionsprodukte in einem formgebenden Verfahren mit einem anorganischen oder organischen Bindemittel oder einer Mischung beider und/oder anderen Zusätzen, bevorzugt Wasser versetzt zu einem Formteil umsetzbar sind.

4. Reaktionsprodukte nach einem der Ansprüche 1 - 3,
**dadurch gekennzeichnet, dass**
das Reaktionsprodukte durch ein thermisches Verfahren, bevorzugt durch Trocknung, zu einem Formteil umsetzbar sind.

5. Reaktionsprodukte nach einem der Ansprüche 3 oder 4,
**dadurch gekennzeichnet, dass**
das Formteil geschlossene Luftkammern mit einem Porendurchmesser von ≤ 100 µm, bevorzugt weniger als 10 µm, bevorzugt weniger als 1 µm, besonders bevorzugt weniger als 200 nm und bevorzugt Wandstärken von weniger als 50 nm aufweist.

6. Verfahren zur Herstellung von Reaktionsprodukten, welche eine thermische Stabilität > 500°C und eine Feinstrukturierung mit einer spezifische Oberfläche BET > 5 m²/g und/oder eine Porosität mit einer durchschnittlichen Porenweite < 100 nm aufweisen, aus Metakaolin einer Korngröße (d₉₈) ≤ 100 µm, einem Al₂O₃-Anteil > 20 Ma-%, einem SiO₂-Anteil < 80 Ma-%, einem Glühverlust <10 Ma-%, einem Kaolinit-Anteil < 50 Ma-% und einer Dichte <2,7 g/ml und einem alkalischem Reaktionspartner, der ein Element der 2. Hauptgruppe des Periodensystems umfasst,
**dadurch gekennzeichnet, dass**
in einem Verfahrensschritt Metakaolin durch Entwässern von Kaolin in einem Temperaturbereich von 550°C bis 900°C durch Bringen auf die Kalziniertemperatur innerhalb einer sehr kurzen Zeit << 1 min. und anschließendem schnellen Bringen auf eine Temperatur < 550°C in einer Zeit << 5 min. thermisch aktiviert und in eine reaktive Form überführt wird und in einem folgenden Verfahrensschritt in wässrigem Medium mit einem alkalischem Reaktionspartner, der ein Element der 2. Hauptgruppe des Periodensystems umfasst, umgesetzt wird.

7. Verfahren nach Anspruch 6,
**dadurch gekennzeichnet, dass**
Metakaolin mit einer Ca-Verbindung und/oder Mg-Verbindung umgesetzt wird, welche bevorzugt CaO, MgO und/oder CaCO₃ umfasst und/oder welche bevorzugt durch eine vorgeschaltete thermische Behandlung von natürlichen Gesteinen, bevorzugt Kalkstein, wie beispielsweise Dolomit, Magnesit oder andere, hergestellt worden ist.

8. Verfahren nach einem der Ansprüche 6 oder 7,
**dadurch gekennzeichnet, dass**
das Metakaolin und der alkalische Reaktionspartner, der ein Element der 2. Hauptgruppe des Periodensystems umfasst, in wässriger Suspension hydrothermal oder atmosphärisch bei einer Temperatur > 0°C, bevorzugt > 20°C, bevorzugt > 30°C, besonders bevorzugt > 50°C miteinander umgesetzt werden.

9. Verfahren nach einem der Ansprüche 6 - 8,
**dadurch gekennzeichnet, dass**
das Reaktionsprodukt in einem formgebenden Verfahren mit einem anorganischen oder organischen Bindemittel oder einer Mischung beider und/oder anderen Zusätzen, bevorzugt Wasser versetzt zu Formteilen umgesetzt wird.

10. Verfahren nach einem der Ansprüche 6 - 9,
**dadurch gekennzeichnet, dass**
das Reaktionsprodukt durch ein thermisches Verfahren, bevorzugt durch Trocknung, zu Formteilen umgesetzt wird.

11. Verfahren nach einem der Ansprüche 6 - 10,
**dadurch gekennzeichnet, dass**
das Reaktionsprodukt zu einem Formteil umgesetzt wird, welches geschlossene Luftkammern mit einem Porendurchmesser von ≤ 100 µm, bevorzugt weniger als 10 µm, bevorzugt weniger als 1 µm, besonders bevorzugt weniger als 200 nm und bevorzugt Wandstärken von weniger als 50 nm aufweist.

12. Verwendung eines Reaktionsproduktes aus einer Reaktion in wässrigem Medium zwischen Metakaolin einer Korngröße (d₉₈) ≤ 100 µm, einem Al₂O₃-Anteil > 20 Ma-%, einem SiO₂-Anteil < 80 Ma-%, einem Glühverlust <10 Ma-%, einem Kaolinit-Anteil < 50 Ma-% und einer Dichte <2,7 g/ml und einem alkalischem Reaktionspartner, der ein Element der 2. Hauptgruppe des Periodensystems umfasst, wobei das Metakaolin durch Entwässern von Kaolin in einem Temperaturbereich von 550°C bis 900°C durch Bringen auf die Kalziniertemperatur innerhalb einer sehr kurzen Zeit << 1 min. und anschließendem schnellen Bringen auf eine Temperatur < 550°C in einer Zeit << 5 min. thermisch aktiviert ist und die Reaktionsprodukte eine thermische Stabilität > 500°C und eine Feinstrukturierung mit einer spezifischen Oberfläche BET > 5 m²/g und/oder eine Porosität mit einer durchschnittlichen Porenweite < 100 nm aufweisen, als Wärmedämmmaterial.

13. Verwendung nach Anspruch 12,
**dadurch gekennzeichnet, dass**
das Reaktionsprodukt in Papier, Farbe, Polymeren, Baumaterial, Feuerfestmaterial, Keramik, Wasseraufbereitungseinrichtungen, Luftreinigungseinrichtungen oder Katalysatoren zugesetzt wird.

## Claims

1. Reaction products made of reacting metakaolin, which has a particle size (d98) of ≤ 100 µm, an Al2O3 portion of > 20 mass %, an SiO2 portion of < 80 mass %, a loss on ignition of < 10 mass %, a kaolinite portion of < 50 mass %, and a density of < 2.7 g/ml, with an alkaline reaction partner, which comprises an element from the second main group of the periodic table, in an aqueous medium, wherein the metakaolin is thermally activated by dehydrating kaolin in a temperature range of from 550 °C to 900 °C by bringing said kaolin to the calcination temperature within a very short time period of << 1 minute and then rapidly bringing said kaolin to a temperature of < 550 °C in a time period of << 5 minutes, and the reaction products have a thermal stability of > 500 °C and a fine structure having a BET specific surface area of > 5 m2/g and/or a porosity having an average pore size of < 100 nm.

2. Reaction products according to claim 1, **characterised in that** the alkaline reaction partner, which comprises an element of the second main group of the periodic table, is a Ca compound and/or a Mg compound which preferably comprises CaO, MgO, Mg(OH)2, Ca(OH)2, CaCO3 and/or mixtures thereof, and/or can preferably be produced by thermally treating natural rocks, preferably limestone rocks, such as dolomite, magnesite or others.

3. Reaction products according to either claim 1 or claim 2, **characterised in that** the reaction products can be reacted with an inorganic or organic binder or a mixture of the two and/or other additives, preferably mixed with water, in a shaping method to form a moulded part.

4. Reaction products according to any of claims 1 to 3, **characterised in that** the reaction products can be reacted using a thermal method, preferably drying, to form a moulded part.

5. Reaction products according to either claim 3 or claim 4, **characterised in that** the moulded part comprises closed air chambers having a pore diameter of ≤ 100 µm, preferably less than 10 µm, preferably less than 1 µm, particularly preferably less than 200 nm, and preferably having wall thicknesses of less than 50 nm.

6. Method for producing reaction products which have a thermal stability of > 500 °C and a fine structure having a BET specific surface area of > 5 m2/g and/or a porosity having an average pore size of < 100 nm, from metakaolin having a particle size (d98) of ≤ 100 µm, an Al2O3 portion of > 20 mass %, an SiO2 portion of < 80 mass %, a loss on ignition of < 10 mass %, a kaolinite portion of < 50 mass % and a density of < 2.7 g/ml, and an alkaline reaction partner comprising an element from the second main group of the periodic table, **characterised in that**, in one method step, metakaolin is thermally activated by dehydrating kaolin in a temperature range of from 550 °C to 900 °C by bringing said kaolin to the calcination temperature within a very short time period of << 1 minute, and then rapidly bringing said kaolin to a temperature of < 550 °C in a time period of << 5 minutes, and is converted into a reactive form and, in a following method step, is reacted in an aqueous medium with an alkaline reaction partner comprising an element from the second main group of the periodic table.

7. Method according to claim 6, **characterised in that** metakaolin is reacted with a Ca compound and/or a Mg compound that preferably contains CaO, MgO and/or CaCO3 and/or has preferably been produced by thermally pre-treating natural rocks, preferably limestone rocks, such as dolomite, magnesite or others.

8. Method according to either claim 6 or claim 7, **characterised in that** the metakaolin and the alkaline reaction partner comprising an element from the second main group of the periodic table are reacted with one another in an aqueous suspension, either hydrothermally or atmospherically, at a temperature of > 0 °C, preferably > 20 °C, preferably > 30 °C, particularly preferably > 50 °C.

9. Method according to any of claims 6 to 8, **characterised in that** the reaction product is reacted with an inorganic or organic binder or a mixture of the two and/or other additives, preferably mixed with water, in a shaping method to form moulded parts.

10. Method according to any of claims 6 to 9, **characterised in that** the reaction product is reacted using a thermal method, preferably drying, to form moulded parts.

11. Method according to any of claims 6 to 10, **characterised in that** the reaction product is reacted to form a moulded part that comprises closed air chambers having a pore diameter of ≤ 100 µm, preferably less than 10 µm, preferably less than 1 µm, particularly preferably less than 200 nm, and preferably having wall thicknesses of less than 50 nm.

12. Use of a reaction product as heat-insulation material, which product is formed from reacting metakaolin, which has a particle size (d98) of ≤ 100 µm, an Al2O3 portion of > 20 mass %, an SiO2 portion of < 80 mass %, a loss on ignition of < 10 mass %, a kaolinite portion of < 50 mass % and a density of < 2.7 g/ml, with an alkaline reaction partner, which comprises an element from the second main group of the periodic table, in an aqueous medium, wherein the metakaolin is thermally activated by dehydrating kaolin in a temperature range of from 550 °C to 900 °C by bringing said kaolin to the calcination temperature within a very short time period of < 1 minute, and then rapidly bringing said kaolin to a temperature of < 550 °C in a time period of < 5 minutes, and the reaction products have a thermal stability of > 500 °C and a fine structure having a BET specific surface area of > 5 m2/g and/or a porosity having an average pore size of < 100 nm.

13. Use according to claim 12, **characterised in that** the reaction product is admixed in paper, dye, polymers, construction material, refractory material, ceramics, water-treatment devices, air-purification devices or catalysts.

## Revendications

1. Produits de réaction d'une réaction dans un milieu aqueux entre du métakaolin d'une taille de grain (d98) ≤ 100 µm, d'une proportion d'Al2O3 > 20 % en masse, d'une proportion de SiO2 < 80 % en masse, d'une perte au recuit < 10 % en masse, d'une proportion de kaolinite < 50 % en masse et d'une densité < 2,7 g/ml, et un partenaire de réaction alcalin qui comprend un élément du 2e groupe principal du tableau périodique, le métakaolin étant activé thermiquement par déshydratation de kaolin dans une plage de température allant de 550 °C à 900 °C par chauffage à la température de calcination en un temps très court << 1 minute, puis chauffage rapide à une température < 550 °C en une durée << 5 minutes, et les produits de réaction présentant une stabilité thermique > 500 °C et une structuration fine avec une surface spécifique BET > 5 m2/g et/ou une porosité ayant une largeur de pores moyenne < 100 nm.

2. Produits de réaction selon la revendication 1, **caractérisés en ce que** le partenaire de réaction alcalin qui comprend un élément du 2e groupe principal du tableau périodique est un composé de Ca et/ou un composé de Mg, qui comprend de préférence CaO, MgO, Mg(OH)2, Ca(OH)2, CaCO3 et/ou des mélanges de ceux-ci, et/ou qui peut de préférence être fabriqué par traitement thermique de pierres naturelles, de préférence de calcaire, tel que par exemple de dolomite, de magnésite ou autres.

3. Produits de réaction selon l'une quelconque des revendications 1 ou 2, **caractérisés en ce que** les produits de réaction peuvent être transformés en une pièce moulée mélangés avec un liant inorganique ou organique ou un mélange des deux et/ou d'autres additifs, de préférence de l'eau, par un procédé de façonnage.

4. Produits de réaction selon l'une quelconque des revendications 1 à 3, **caractérisés en ce que** les produits de réaction peuvent être transformés en une pièce moulée par un procédé thermique, de préférence par séchage.

5. Produits de réaction selon l'une quelconque des revendications 3 ou 4, **caractérisés en ce que** la pièce moulée comprend des chambres d'air fermées d'un diamètre de pores ≤ 100 µm, de préférence inférieur à 10 µm, de préférence inférieur à 1 µm, de manière particulièrement préférée inférieur à 200 nm, et de préférence des épaisseurs de paroi inférieures à 50 nm.

6. Procédé de fabrication de produits de réaction qui présentent une stabilité thermique > 500 °C et une structuration fine avec une surface spécifique BET > 5 m2/g et/ou une porosité ayant une largeur de pores moyenne < 100 nm, de métakaolin d'une taille de grain (d98) ≤ 100 µm, d'une proportion d'Al2O3 > 20 % en masse, d'une proportion de SiO2 < 80 % en masse, d'une perte au recuit < 10 % en masse, d'une proportion de kaolinite < 50 % en masse et d'une densité < 2,7 g/ml, et d'un partenaire de réaction alcalin qui comprend un élément du 2e groupe principal du tableau périodique, **caractérisé en ce que**, lors d'une étape de procédé, du métakaolin est activé thermiquement par déshydratation de kaolin dans une plage de température allant de 550 °C à 900 °C par chauffage à la température de calcination en un temps très court << 1 minute, puis chauffage rapide à une température < 550 °C en une durée << 5 minutes, et transféré sous une forme réactive, et, lors d'une étape de procédé ultérieure, mis en réaction dans un milieu aqueux avec un partenaire de réaction alcalin qui comprend un élément du 2e groupe principal du tableau périodique.

7. Procédé selon la revendication 6, **caractérisé en ce que** le métakaolin est mis en réaction avec un composé de Ca et/ou un composé de Mg, qui comprend de préférence CaO, MgO et/ou CaCO3 et/ou qui peut de préférence être fabriqué par traitement thermique préalable de pierres naturelles, de préférence de calcaire, tel que par exemple de dolomite, de magnésite ou autres.

8. Procédé selon l'une quelconque des revendications 6 ou 7, **caractérisé en ce que** le métakaolin et le partenaire de réaction qui comprend un élément du 2e groupe principal du tableau périodique sont mis en réaction l'un avec l'autre dans une suspension aqueuse par voie hydrothermale ou atmosphérique à une température > 0 °C, de préférence > 20 °C, de préférence > 30 °C, de manière particulièrement préférée > 50 °C.

9. Procédé selon l'une quelconque des revendications 6 à 8, **caractérisé en ce que** le produit de réaction est transformés en pièces moulés mélangé avec un liant inorganique ou organique ou un mélange des deux et/ou d'autres additifs, de préférence de l'eau, par un procédé de façonnage.

10. Procédé selon l'une quelconque des revendications 6 à 9, **caractérisé en ce que** le produit de réaction est transformé en pièces moulés par un procédé thermique, de préférence par séchage.

11. Procédé selon l'une quelconque des revendications 6 à 10, **caractérisé en ce que** le produit de réaction est transformé en une pièce moulée qui présente des chambres d'air d'un diamètre de pores ≤ 100 µm, de préférence inférieur à 10 µm, de préférence inférieur à 1 µm, de manière particulièrement préférée inférieur à 200 nm, et de préférence des épaisseurs de paroi inférieures à 50 nm.

12. Utilisation d'un produit de réaction d'une réaction dans un milieu aqueux entre du métakaolin d'une taille de grain (d98) ≤ 100 µm, d'une proportion d'Al2O3 > 20 % en masse, d'une proportion de SiO2 < 80 % en masse, d'une perte au recuit < 10 % en masse, d'une proportion de kaolinite < 50 % en masse et d'une densité < 2,7 g/ml, et un partenaire de réaction alcalin qui comprend un élément du 2e groupe principal du tableau périodique, le métakaolin étant activé thermiquement par déshydratation de kaolin dans une plage de température allant de 550 °C à 900 °C par chauffage à la température de calcination en un temps très court << 1 minute, puis chauffage rapide à une température < 550 °C en une durée << 5 minutes, et les produits de réaction présentant une stabilité thermique > 500 °C et une structuration fine avec une surface spécifique BET > 5 m2/g et/ou une porosité ayant une largeur de pores moyenne < 100 nm, en tant que matériau isolant thermique.

13. Utilisation selon la revendication 12, **caractérisée en ce que** le produit de réaction est ajouté à du papier, de la peinture, des polymères, un matériau de construction, un matériau ignifuge, une céramique, des appareils de conditionnement de l'eau, des appareils de purification de l'air ou des catalyseurs.
